(19)

**Europäisches Patentamt**

**European Patent Office**

**Office européen des brevets**

(11) **EP 4 715 729 A1**

(12) **EUROPEAN PATENT APPLICATION**

(43) Date of publication:
25.03.2026 Bulletin 2026/13

(21) Application number: 24201683.0

(22) Date of filing: 20.09.2024

(51) International Patent Classification (IPC):
*G06T 7/00* (2017.01)    *B29C 65/00* (2006.01)

(52) Cooperative Patent Classification (CPC):
**G06T 7/0004; B29C 66/96;** G06T 2207/10048;
G06T 2207/30152

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Aisapack Holding SA**
**1896 Vouvry (CH)**

(72) Inventors:
- **THELJANI, Fouad**
  **1870 Monthey (CH)**
- **THOMASSET, Jacques**
  **74500 Neuvecelle (FR)**

(74) Representative: **Grosfillier, Philippe**
**André Roland SA**
**IP Attorneys & Services**
**Avenue Collonges 21**
**1004 Lausanne (CH)**

(54) **PROCESS FOR MANUFACTURING A TUBULAR PACKAGE BY WELDING**

(57)    The invention relates to a process for manufacturing a tubular package by welding the end of a tubular body to a component, said component potentially being a shoulder, a cap or a bottom, which process comprises at least the following steps:

A. supplying a component;

B. supplying a tubular body;

C. heating respective regions to be welded on the component and on the tubular body;

D. placing under pressure the regions to be welded and partially cooling the weld;

E. capturing a thermal image of the partially cooled weld region;

F. characterizing the weld, this comprising pre-processing and processing said thermal image;

ejecting defective welded packages;

said process being characterized in that, in step F, the processing of the thermal image uses an artificial-intelligence algorithm that extracts at least a geometric signature and a thermal signature of the weld and makes it possible in real time to detect defective packages in a production batch.

Figure 3

Flowchart contents:
- Preceding steps of manufacture of the package
- A - Supplying the component
- B - Supplying the tubular body
- C - Heating the respective regions to be welded
- D - Placing under pressure the regions to be welded and partially cooling the weld
- E - Acquiring the thermal image of the partially cooled weld region
- F - Pre-processing: Extracting the weld region, removing noise and flattening out
- G - Extracting the geometric signature and computing the geometric index of the weld
- H - Extracting the thermal signature and computing the thermal index of the weld
- I - Computing the uniformity index of the weld
- J - Computing the eccentricity index of the weld
- K - Evaluating the quality of the weld
- Weld Acceptable — No → Ejecting the defective package from the production batch
- Yes → L - Updating the control chart
- Welding parameters optimal — No → M - Controlling the welding process
- Yes → N - Following steps of manufacture of the package

EP 4 715 729 A1

**Description**

TECHNICAL FIELD

The invention relates to the field of manufacture by welding of flexible packaging tubes comprising at least one flexible tubular body connected to a component by welding. The invention describes a high-throughput welding process that integrates an in-line inspection of the weld joining the tubular body and the component. According to the invention, the component is for example a tube head, an opening/closing system or a closed end such as a bottom.

PRIOR ART

Publication WO2018150415 describes use of thermal imaging to determine the integrity of the packaging of packaged products in order to ensure the packaging is closed properly. In the process described in WO2018150415, the thermal image may be captured:

- either in phase A, during or after filling of the packaging (but before completion of the sealing phase);
- or in phase B, after completion of the sealing phase;
- or during both phases A and B.

The process according to WO2018150415, which inspects the welding closure region after filling, makes it possible to detect poor sealing caused by defects such as contamination of the sealing region by the contents of the packaging during filling of the packaging. WO2018150415 teaches inspection of flat welds, created by pinching and welding the end of a pouch, after said pouch has been filled.

SUMMARY AND PRINCIPLE OF THE INVENTION

One aim of the invention is to inspect the quality of the assemblage by welding of flexible packaging tubes comprising at least one flexible tubular body and a component which may be a tube head, an opening/closing system or a closed end such as a bottom. These tubes are in particular, but not exclusively, intended for packaging products that are liquid or viscous, semi-liquid or solid (in powder form for example).

The invention relates to a process and device for welding packaging on a single- or multi-track indexed rotary turret comprising at least one thermal camera allowing welding defects to be detected in real time by processing the image (or images) captured by the camera, in a high-throughput package-manufacturing process.

Another aim is to provide a process that allows thermal and geometric signatures characterizing the quality of the assemblage by welding to be computed in real time.

Another aim of the invention is to monitor the production procedure in real time, via control charts, and to rapidly detect any variation or deviation of the procedure from a stable and controlled behaviour.

Another aim is to provide a welding process and device that are easy to adjust, easy to put into service and easy to optimize by virtue of in-line inspection of the quality of the weld.

Another aim of the invention is to provide a control mechanism that adjusts the welding parameters in real time depending on the determined characteristics of the weld. The aim of this control mechanism is to obtain constant weld properties despite variations in the production environment, or despite variations in properties of the welded components, or despite variations related to the production equipment.

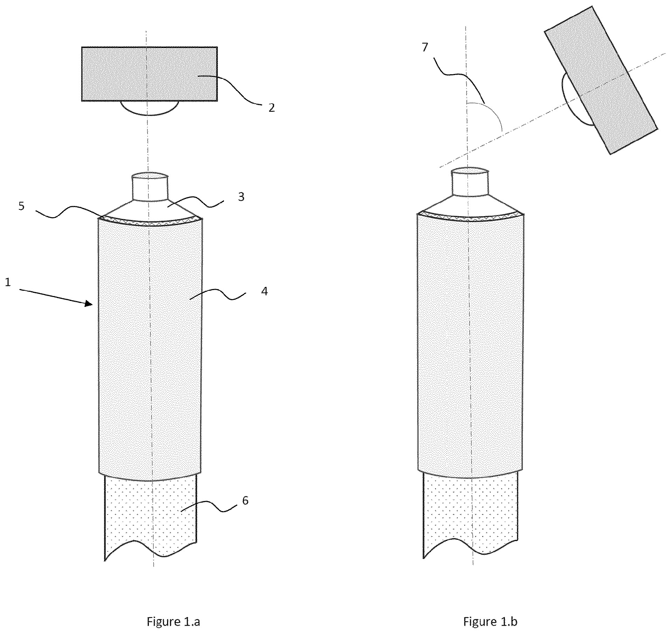

The invention in particular relates to a high-throughput process for manufacturing a flexible package (for example made of plastic or paper) comprising at least a tubular body and a component, which may for example be a tube head, said process comprising a step of welding the body and the component to each other. According to the invention, a thermal image of the assembly is captured in real time while keeping throughput high. The thermal camera is preferably positioned along the axis of the package as illustrated in Figure 1.

The invention is mainly described with respect to a process for welding flexible packaging using hot air; however, other welding methods may be envisaged within the context of the invention, such as, for example, radiation-based welding, or electromagnetic induction welding, or ultrasonic welding.

According to the invention, pre-processing is carried out on the thermal image, said pre-processing in particular comprising the following steps:

- isolating a region of interest in the captured image;
- applying blurring to said region;
- applying thresholding to said region;
- removing noise from said region;
- extracting the weld region and flattening out said weld region with a view to analysis thereof according to the principles of the present invention.

The methods used for the pre-processing are described in the detailed description of the invention below.

In another step of the invention, which follows the steps mentioned above, the extracted weld region, after blurring, thresholding and removal of noise, is used to deduce the width of the weld in pixels and/or millimetres.

In another step of the invention, the extracted weld region, after blurring, thresholding and removal of noise, is used to deduce the residual temperature by computing the temperature trend in said weld region. This trend may be determined by computing the mean value and/or median value and/or modal value and/or central value and/or via the quantile method applied to the pixels of said weld region or even via other equivalent methods. According to one preferred method, the temperature trend is evaluated by computing the mean value.

In one step of the invention, characteristics called "geometric and thermal signatures of the weld" are extracted. One of the methods for extracting these signatures comprises computing the temperature profile in two perpendicular directions: a first direction called the longitudinal direction (i.e. along the circumference of the weld) and a perpendicular second direction called the transverse direction (i.e. in the direction of the width of the weld).

The longitudinal temperature profile is obtained by computing, for each longitudinal position, the resultant temperature of the transverse positions. The resultant temperature may be obtained according to a number of methods, and preferably by computing the mean value and/or median value and/or mode and/or central value. This computation generates a longitudinal profile signal that characterizes the longitudinal variation in the temperature along the circumference of the weld region.

Similarly, it is also possible to obtain the transverse temperature profile by computing, for each transverse position, the resultant temperature longitudinally. Likewise, the resultant temperature may for example be obtained by computing the mean value and/or median value and/or mode and/or central value in the longitudinal direction. According to one preferred method, the resultant temperature is obtained by computing the mean value. This generates a transverse profile signal, which illustrates the transverse variation (in the direction of the width of the weld) in the temperature in the weld region.

In another step of the invention, at least one statistical method is used to compute in real time a uniformity index of the weld, at least on the basis of the longitudinal temperature profile signal. This index may for example be obtained by computing standard deviation, or via the method of moments, or by estimating maximum likelihood, or by computing the moving standard deviation and/or weighted standard deviation, or by computing asymmetry (or skewness) and/or by measuring kurtosis, or via other equivalent methods. According to one preferred method, the uniformity index of the weld is computed using the standard deviation. It is also possible to use the transverse temperature profile signal for the index or a combination of both profiles (longitudinal profile and transverse profile) as described in detail below.

In one step of the invention, a real-time measurement comprises computing an eccentricity index of the weld. The computing method regards determination of the difference between the centroid of the actual weld region and the centroid of the theoretical weld region. The latter is estimated via static regression methods, for example logistic regression, Ridge and Lasso regression, partial least squares regression or other equivalent methods.

In one step of the invention, defective packages are detected and ejected (for example removed or extracted) from the production batch. The quality of the weld may be evaluated on the basis of in-line measurements of one or more weld characteristics during production and without stopping the machine. The measured weld characteristics are for example its width, residual temperature, eccentricity, uniformity or any other characteristic measurement of the weld that could be relevant within the context of the present invention and as described in the present application. The detecting method is based on a measurement of the dissimilarity between the tube and a reference. The latter may be obtained using manual calibration to set tolerance limits or via machine learning on samples.

In one step of the invention, a control chart - for example a MWEMA control chart (MWEMA standing for multivariate exponentially weighted moving average), a Hotelling $T^2$ control chart, a MCUSUM control chart (MCUSUM standing for multivariate cumulative sum) or a $\phi$ (phi) control chart - for detecting variations and deviations from a steady state may be used.

In another step of the invention, a control loop may be applied, said loop comprising real-time control of welding controls (parameters), on the basis of in-line measurements of one or more weld characteristics during production and without stopping the machine. The measured weld characteristics are for example its width, residual temperature, eccentricity, uniformity or any other characteristic measurement of the weld that could be relevant within the context of the present invention and as described in the present application.

According to embodiments of the invention, the control loop may be a self-adaptive loop that adjusts the controls depending on the actual behaviour of the welding process. A numerical model the parameters of which are self-adjustable is used to model in-line the behaviour of the welding process.

According to embodiments of the invention, the control mechanism may act on one or more parameters of the welding process, said parameters for example comprising heating temperature, heating time, heating distance and/or the flow rate of the heating air. For example, the process may be parameterized by changing:

- The temperature of the air: adjusting the temperature of the preheated air to reach the desired temperature on the component.
- The time of exposure to the air: controlling the length of time for which the component is exposed to the hot air to ensure uniform heating.
- The distance between an air nozzle and the component to be heated: adjusting this distance to influence the concentration of heat on the component.
- The flow rate of the heating air: Modifying the air flow rate to control the amount of heat transferred to the component.

According to embodiments of the invention, the control mechanism aims to keep stable welding characteristics which may be the width of the weld, the temperature of the cooled component, eccentricity and/or uniformity, despite variations in the production environment, and/or despite variations in the properties of the welded components, and/or despite variations related to the production equipment.

The various steps of the process according to the invention and the tools of the device for inspecting the weld and the embodiments thereof used in the context of the present invention are described below in greater detail.

BRIEF DESCRIPTION OF THE DRAWINGS

Figs. 1.a and 1.b illustrate a step of the process for welding a package 1 positioned on a mandrel 6 and comprising a component 3 and a tubular body 4, in which step a camera 2 captures a thermal image of the partially cooled weld 5.

Figure 2 illustrates a schematic representation of an indexed welding device, comprising an indexed turret 8 rotating in the direction 10 and comprising mandrels 6 and stations 9 and allowing certain steps of the process to be visualized.

Figure 3 illustrates in a flowchart the various steps of the welding process according to the invention.

Figure 4 illustrates the main steps of the digital pre-processing of the thermal image of the weld. The sub-steps shown in Figure 4 are described below:

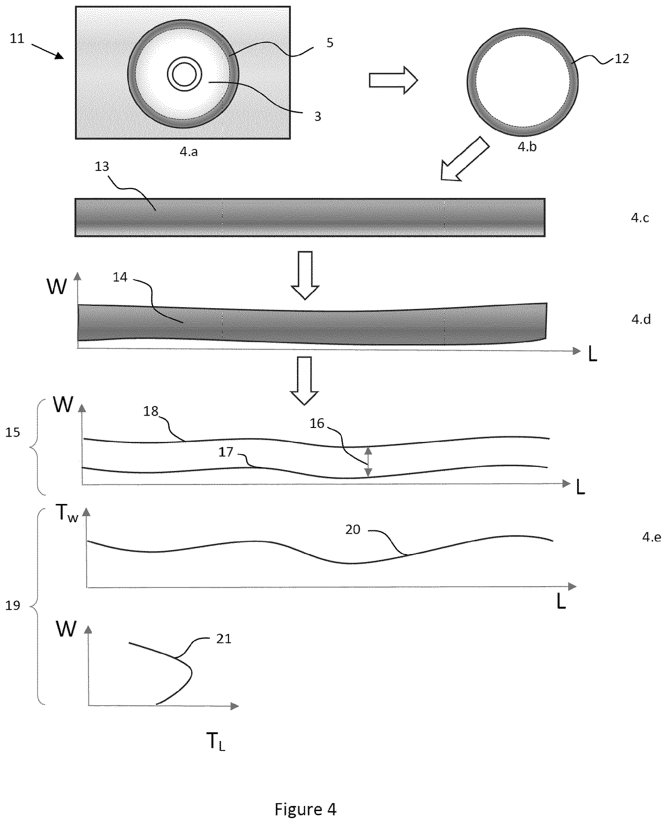

Figure 4.a illustrates one example of a raw thermal image 11 taken by the infrared camera positioned along the vertical axis of the package.

Figure 4.b illustrates part of the pre-processing of the raw thermal image.

Figure 4.c illustrates the operation of flattening out the weld region.

Figure 4.d illustrates the flattened image after thresholding.

Figure 4.e illustrates extraction of the thermal image of the weld comprising the longitudinal and transverse temperature signature.

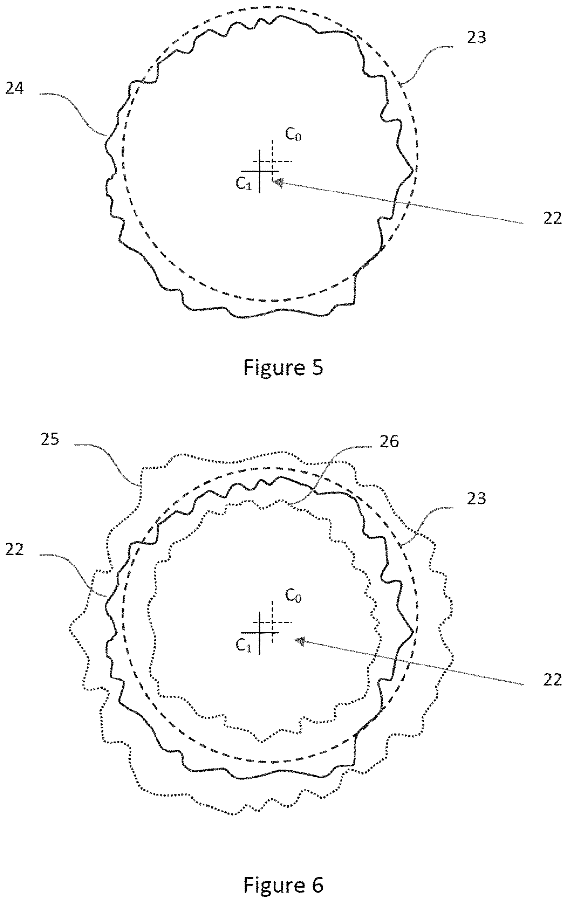

Figure 5 illustrates graphically the eccentricity index of the weld 22. It corresponds to the deviation between the centre of the theoretical weld region 23 and the centre of the actual weld region 24.

Figure 6 illustrates the tolerance envelope computed using the control chart employed. It has an upper limit 25 and a lower limit 26.

DETAILED DESCRIPTION

1: package
2: thermal camera
3: component
4: tubular body
5: partially cooled weld
6: mandrel
7: camera-mandrel tilt angle
8: indexed turret
9: station
10: direction of rotation
11: thermal image
12: isolated weld 5
13: weld 12 flattened out
14: processed weld 13
15: geometric signature of the weld
16: width of the weld
17: lower geometric limit of the weld
18: upper geometric limit of the weld
19: thermal signature of the weld
20: longitudinal thermal signature
21: transverse thermal signature
22: eccentricity index
23: ideal thermal signature (theoretical weld region)
24: reconstructed thermal signature (actual weld region)
25: upper limit of the control chart
26: lower limit of the control chart

The invention relates to a high-throughput process for manufacturing packages 1, for example tubular packages, by welding. The process for manufacturing the package 1 comprises a plurality of successive steps, including at least one operation of welding a tubular body 4 and a component 3, but it may comprise other assembly operations such as for example welding a seal to a tube head, or/and screwing or clip-fastening a cap on a tube head. All of these operations together result in an empty tubular package 1 which is generally boxed in a carton; however, alternatively it may be transferred to a device for filling said package 1.

Since the manufacturing operations are carried out in succession, throughput is set by the operation requiring the longest time. The invention is particularly useful when throughput is high and when any operation of inspecting all the produced packages becomes impossible without an automated inspecting device. One aspect of the invention comprises adding a step of in-line inspection to the manufacturing procedure. This step is illustrated in Figure 1.

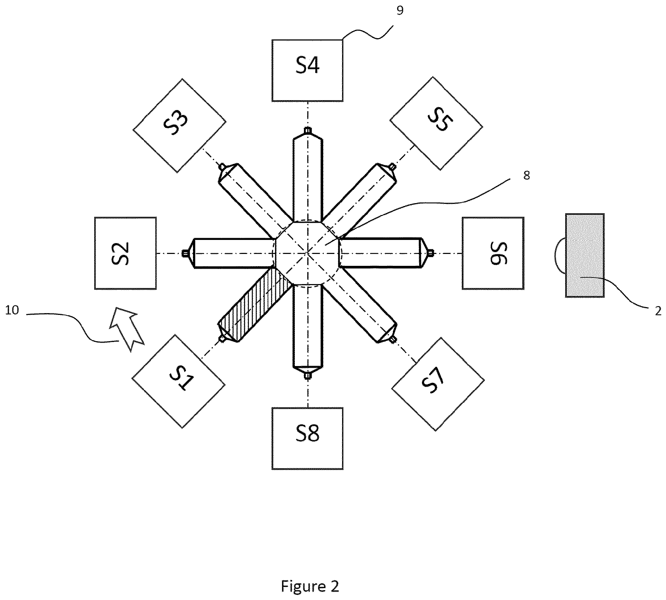

According to the invention, the steps of the manufacturing and inspecting process are carried out on an indexed device, preferably an indexed rotary turret. Other devices may be envisaged such as indexed linear devices. Figure 1 illustrates the assemblage of the tubular body 4 and of the component 3, thus forming a package 1. The partially cooled weld 5 connects the end of the tubular body 4 and the periphery of the component 3. A mandrel 6 fastened to the indexed turret holds the package 1 in position and transfers it from one station to another. A more detailed description of the turret and of the stations is given with reference to Figure 2. A thermal camera 2 captures in real time the infrared image of the package 1 and in particular of the weld region 5. As illustrated in Figure 1.a, the camera 2 is preferably positioned along the axis of the package 1 (or of the mandrel 6) in order to capture the entire weld region 5 in a single image. An alternative solution could comprise positioning the camera 2 with a tilt angle 7 to the axis of the package 1 (Figure 1.b) and in taking a plurality of successive images in order to cover every side of the weld region 5. This solution is more complex to implement because it requires a relative movement between the camera 2 and the package 1 between each image.

In embodiments, the thermal camera 2 covers a wavelength of between 0.85 and 14 micrometres and preferably between 8 and 14 micrometres.

A key point of the invention resides in the fact that the weld 5 has partially cooled at the moment of image capture and the invention makes it possible to overcome technical constraints imposed by the production device. One problem that the invention makes it possible to overcome is performance of the evaluation of the quality of the weld despite the fact that the measured temperature is about 2 times lower than the actual temperature of the welded interface at the moment of assemblage because it is not possible to take a temperature measurement at the moment of assemblage due to the presence of the machine elements performing the assemblage and forming the weld. Another problem, which is overcome by the invention, is related to the fact that the thermal measurement of the weld is carried out with a time delay related to the indexed device. Another problem, which is overcome by the invention, is related to the fact that the measured temperature is that of the external surface of the package and not that of the welded interface, which is not measurable because it is inaccessible.

For example, in one typical embodiment according to the invention, first the interface of a polyethylene tubular body and of a polyethylene component is heated with air at 450° in a first station, then transfer is achieved (by indexing) and the region to be assembled is pressed in a second station with a tool cooled to 20°C, then transfer is achieved (by indexing) and the temperature of the weld 5 is measured, such as illustrated in Figures 1.a/1.b. The partially cooled temperature of the weld region 5 (also called the residual temperature) is measured - it is for example between 40 and 80°C and more typically between 50 and 70°C. As described in the present application, the invention makes it possible, on the basis of the residual temperature, to evaluate the quality of the weld.

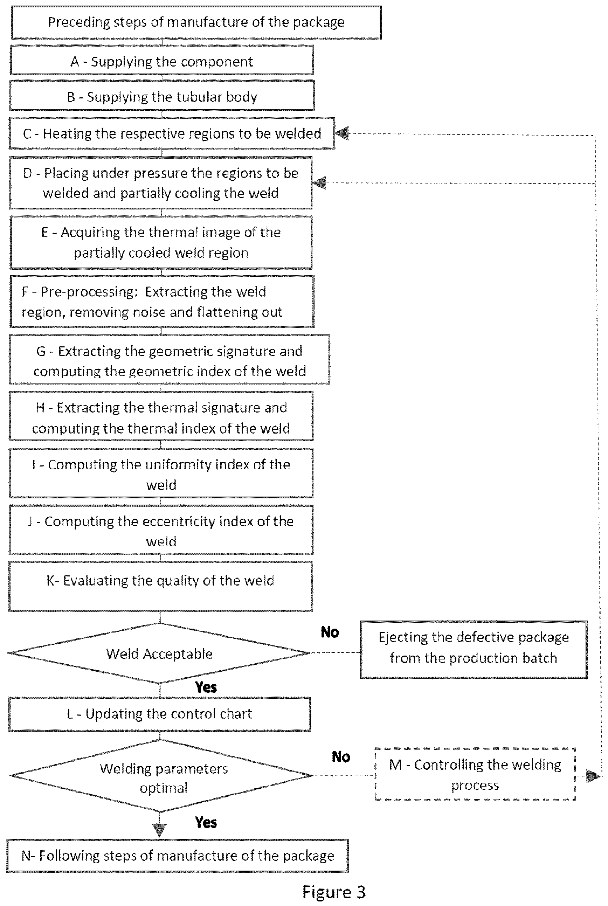

Figure 2 illustrates the main steps of the process according to the invention carried out on an example of an indexed turret 8. In the first station S1 of the turret corresponding to step A of the process (illustrated in Figure 3), a component 3 is placed on the mandrel 6. After indexing, a tubular body 4 is also loaded onto said mandrel 6 in station S2, this corresponding to step B of the process. After indexing, the end to be welded of the tubular body 4 may be precisely positioned with respect to the component 3 in station S3. After indexing, the interface to be welded of the tubular body 4 and of the component 3 is heated in station S4. The interface is heated via known methods such as for example with hot air or using a heating tool or via ultrasound, or using radiation, or via electromagnetic induction. After indexing, the tubular body 4 and the component 3 are welded by pressing and cooling the weld in station S5. The tooling used to press and cool the weld is controlled to a temperature lower than the melting point of the welding layer divided by 2 and preferably to a temperature lower than 25°C. After indexing, a thermal image of the residual welding temperature (as illustrated in Figures 1.a, 1.b and 4.a) is captured in station S6 using the device illustrated in Figure 1. According to the invention, real-time processing of the image makes it possible to detect defective welds, to monitor the stability of the process and to optimize the settings of the production machine. These operations are described in greater detail with reference to Figures 3 and 4 and below. After indexing, a sealing or capping operation may be carried out in station S7 if the weld is not defective. After indexing (station S8), the package 1 is transferred to the following part of the manufacturing line, which may be a boxing machine for packing empty packages into cartons or alternatively a filler for filling the package. Defective packages detected in station S6 may be separated from the production batch, for example by extracting said defective packages in station S8.

Figure 3 illustrates by means of a flowchart the various steps of the welding process according to the invention. The steps will now be described in the following below:

### A - Supplying the component

The process begins with a step A of supplying to a first station S1 a component 3 that is initially premanufactured. The component 3 may be a tube head, an opening/closing system or a closed end such as a package bottom. The component 3 may have a round shape, or it may have another shape such as, for example, an oval shape, a rectangular shape, a square shape or another geometrical shape depending on what is to be produced. According to the invention, a component 3 is typically round in shape. The component 3 is manufactured beforehand from a suitable material such as, for example, plastic, paper or a mixture of suitable materials.

*8 - Supplying the tubular body*

In Figure 3, the following step, step B, is supplying a tubular body 4 to a second station S2. The tubular body 4 is loaded onto the mandrel 6 along the axis of the latter, a component 3 having already been positioned on the mandrel, in order to allow association of the two elements, i.e. the component 3 and tubular body 4, intended to be welded together. The tubular body 4 is manufactured beforehand from a flexible material such as plastic, paper or a mixture of suitable materials. Said tubular body 4 is characterized by its length and its diameter. According to the invention, for example, the diameter of the tubular body 4 varies between 8 and 90 millimetres and preferably between 12.5 and 65 millimetres. The tubular body 4 is between 30 and 300 millimetres in length and preferably between 50 and 250 millimetres in length. Of course, these are indicative values and other values are possible.

*C - Heating the respective regions to be welded*

In Figure 3, in a successive step C, the respective regions to be welded of the component 3 and of the tubular body 4 are first heated in a first station S3 with hot air or by a heating tool or via ultrasound, or using radiation, or via electromagnetic induction, or via any other suitable means/process.

*D - Placing under pressure the regions to be welded and partially cooling the weld*

In a following step, step D, in a following station S4, the respective regions to be welded of the component 3 and of the tubular body 4 are welded by applying pressure thereto and cooling them via contact with tooling the temperature of which is controlled.

*E - Acquiring the thermal image of the partially cooled weld region*

In a following step, step E, of the flowchart, an infrared camera 2 is positioned to image the partially cooled weld region 5. The camera 2 is positioned so as to obtain an optimal view of the welded region 5, allowing thermal details to be imaged with high precision. Figure 4.a illustrates one example of a raw thermal image 11 of a welded package. The thermal camera 2 in the example of Figure 1 is placed along the vertical axis of the mandrel 6 (see Figure 1). This configuration has the advantage of having a camera 2 stationary and the package (tubular body 4 + component 3) stationary at the time of capture of the image.

*F - Pre-processing: Extracting the weld region, removing noise and flattening out*

The raw thermal image 11 first undergoes pre-processing in step F using smart algorithms integrated into a controller. This pre-processing of the thermal image 11 includes a plurality of specific operations aimed at improving the quality of the thermal image 11 and the extracted information. A first operation comprises isolating and extracting the region of interest 12 from the thermal image 11. This makes it possible to focus the analysis on the most relevant parts of the welded package 1 (in particular the weld 5), by removing unnecessary regions that could disrupt or complicate the analysis. Extraction is achieved via algorithms for recognizing and detecting geometric shapes or edges. For example, in the case of round components, algorithms for detecting circles and rings, such as 12 illustrated in Figure 4.b, are employed.

Another pre-processing operation comprises application of blurring. This technique helps to denoise the image 12 and reduce fine details that are not necessary for the subsequent analysis, thus allowing the main features of the image 12 to be made more apparent. Among the blurring methods that may be applied, mention will be made of "Gaussian blur" and "median blur" by way of non-limiting examples.

Another successive pre-processing operation comprises flattening out the weld region 12 after it has been extracted, blurred and de-noised, as shown in Figure 4.b. This flattening operation aims to convert the surface of the weld region 12 into a planar representation, thus facilitating its subsequent analysis. According to a preferred, artificial-intelligence method, this flattening processing is carried out using the unwrapping method. This technique allows a curved or three-dimensional surface to be converted into a flat image. A concrete illustration of this flattening procedure is illustrated in Figure 4.c.

A successive pre-processing operation comprises, once the weld region 13 has been flattened out, applying a thresholding procedure to the flattened image of the weld region. This procedure in particular comprises defining a temperature threshold, thus allowing the pixels of the flattened image 13 to be filtered depending on their temperature value. More precisely, this operation aims to preserve only pixels the temperatures of which are considered to be significant and relevant to the analysis. Pixels the temperatures of which are below this threshold are removed, this allowing the analysis to be concentrated exclusively on actually welded regions. This processing is crucial to reduce noise and irrelevant information, thus ensuring that only reliable data are retained for subsequent analysis steps. The temperature threshold is established via calibration or using a quantile method. The result of this processing is illustrated by the image 14 of Figure 4.d.

*G - Extracting the geometric signature of the weld and computing the geometric index of the weld*

Once the pre-processing has completed, the following phase, phase G, which aims to extract the geometric characteristics of the weld, starts. This phase requires operations to be carried out that convert the image 14 into a digital signal, also called the "geometric signature" 15, as illustrated in Figure 4.e. Based on signal-processing techniques, these operations compute the geometric signature, which is characterized by the width of the weld 16 and the geometric limits 17 and 18. The latter describe the profile of the weld, in particular its upper and lower edges. In this invention, "geometric limit" refers to the demarcation between the welded region and the unwelded region. Various methods, such as temperature thresholding or minima and maxima analysis, may be employed to identify these geometric limits.

The geometric index of the weld represents a single value representative of the shape of the weld. To establish this value, various approaches may be envisaged. It is possible, for example, to determine the mean width of the weld. Alternatively, use of the median value or the central value are also advantageous options that may be employed in variants. Other comparable techniques may be applied in this context. Subsequently, this width dimension serves as a quality indicator in the context of generation of a conformity index relating to the width of the weld, in accordance with the information specified in section K.

*H - Extracting the thermal signature of the weld and computing the thermal index of the weld*

The following step in Figure 3, step H, comprises extracting the thermal signature of the weld, which comprises at least a longitudinal temperature signature 20 and a transverse temperature signature 21. The thermal signature is illustrated in Figure 4.e.

The analysis of the longitudinal temperature (20) focuses on the variation in the thermal distribution along the whole length of the weld. To characterize this longitudinal thermal signature, various computational approaches are possible. For example, one method may comprise computing the mean of the temperatures in the transverse direction. Alternatively, other techniques may be used, such as computing the median value or the central value of the temperature in the same direction. The resulting profile, which represents the longitudinal temperature signature (20) and which is illustrated in Figure 4.e, reveals crucial information on temperature variations along the weld, this being useful for detecting specific anomalies or defects on the circumference of the weld.

The transverse thermal signature 21 is computed in a similar manner. To do this, the techniques mentioned above in respect of determining the longitudinal thermal signature are used, but this time a perpendicular orientation is adopted. For example, one method comprises taking a mean of the temperatures along the longitudinal axis in order to determine the transverse thermal profile. Other approaches use computation of the median value or central value, still based on the longitudinal direction.

The temperature index is a key numerical value that evaluates the general trend of the heat in the weld region. The temperature index may be computed via various methods: computing the overall mean, the median, the mode, the central value, or even by applying the quantile method to the pixels of the region in question. A preferred approach to assessing this thermal trend is computation of the mean. Subsequently, this index is used as a value to establish a weld conformity score, based on the temperature level reached, as explained in section K.

*I - Computing a uniformity index of the weld*

In step I of Figure 3, the uniformity index of the weld is computed in real time using at least one statistical method based on the longitudinal thermal signature 20 and/or transverse thermal signature 21. Various statistical techniques may be used to compute this index on the basis of the thermal signatures obtained beforehand. These statistical techniques may for example comprise computing the standard deviation of the signal, or the moment of the signal or its maximum probability. Other more sophisticated methods, such as the weighted moving standard deviation, or measurement of skewness or of Kurtosis, may also be used. The preferred method for computing the uniformity index is the standard deviation, due to its simplicity, the speed of its execution and its reliability in evaluating the variability of thermal signatures, this contributing to achievement of an effective and instantaneous quality inspection during welding.

In one preferred embodiment, the uniformity index is typically extracted from the longitudinal thermal signature. Otherwise, the mean of the two indices extracted from the longitudinal thermal signature and the transverse thermal signature, respectively, is retained. The value of the retained uniformity index is then used to compute a qualitative conformity score in terms of weld uniformity, as described in section K.

*J - Computing an eccentricity index of the weld*

The aim of the following step, step J, is to compute an eccentricity index quantifying the centring between the (desired) theoretical weld region 23 and the actual weld region 24 - see Figure 5. This eccentricity index quantifies the deviation between the centroid $C_0$ of the theoretical weld region 23 and the centre $C_1$ of the actual weld region 24. The theoretical weld region 23 is estimated using advanced statistical regression methods. These methods include, but are not limited to, logistic regression, Ridge and Lasso regression, and partial least squares (PLS) regression. One notable advantage of these regression methods is their independence with respect to the shape of the weld region. Specifically, these techniques are capable of adapting to weld regions of various shapes, i.e. to weld regions whatever their shape: round, oval, rectangular, oblong or any other geometrical shape. These methods make it possible to ensure a precise and reliable estimation of the theoretical centroid $C_0$, whatever the variations in the shape of the actual weld region. Figure 5 illustrates in graphical form this eccentricity index 22 of the weld.

The eccentricity index is then used to compute a qualitative conformity score of the weld in terms of the centrality of the actual weld region relative to the theoretical weld region. The computation of this score is explained in section K.

### K - Evaluating the quality of the weld

In a following step, step K, the quality of the weld is evaluated and defective packages are identified and removed from the production batch. The quality of the weld is evaluated by virtue of real-time computations of the various quality indices of the weld. These quality indices in particular comprise the geometric index, the thermal index, the uniformity index and the eccentricity index, and any other measurement relevant to evaluation of the quality of the weld in the context of this invention.

The method for detecting defective welds is based on the following approach: An individual dissimilarity score is assigned to each quality index computed beforehand according to the principles described in sections G, H, I and J.

These indices are as described in the present application, and in particular: the geometric index (width of the weld), the thermal index (residual temperature), the uniformity index and the eccentricity index. Thus, in real time, each weld is evaluated by way of at least 4 dissimilarity scores: a geometric score, a thermal score, a uniformity score and an eccentricity score.

Each score evaluates the similarity of the weld to an established reference. There are two approaches to setting the tolerances for these scores: one comprises performing a manual calibration while the other is based on use of machine-learning techniques.

By way of illustration, one quality index will be considered, for example the geometric index (representative of the width of the weld). The strategy to follow to deduce the geometric score associated with this index is described below.

Case of a reference defined beforehand by manual calibration: In this scenario, the user predefines a lower limit $L_{lower}$ and an upper limit $L_{upper}$ for the width of a weld considered acceptable. These limits, expressed in millimetres, are established by calibration and serve as reference. For each package produced, the geometric index of the weld is computed in-line according to the principle described in section G above. This index I is then compared to the predefined limits by computing a dissimilarity score S as follows:

$$S = \frac{|L_{upper} + L_{lower} - 2I|}{L_{upper} - L_{lower}}$$

A score S of 1 or less indicates a low dissimilarity with respect to the reference, and therefore an acceptable quality within the tolerance limits defined beforehand by the user. In contrast, if the score exceeds the value 1, the dissimilarity with respect to the reference is considered high, indicating non-conformity of the quality of the package.

Case of a reference defined beforehand by machine learning: In the case of this embodiment, a dissimilarity score S is computed using the same strategy, i.e. the strategy described in a), except that the tolerance limits $L_{lower}$ and $L_{upper}$ are not defined via manual calibration. They are instead computed using machine learning, on the basis of samples of packages considered to be qualitatively acceptable in terms of weld width. These samples serve as references for establishing the values of the tolerance limits.

The strategy illustrated above in the context of the description of the method for computing the geometric score is applied in a similar manner to the other quality indices mentioned above, thus allowing one individual score per quality index to be generated. A plurality of methods may be used to identify defective packages on the basis of the scores of each quality index.

A first method comprises considering a package to be defective if at least one quality index has a dissimilarity score greater than 1, indicating non-conformity with respect to the reference.

A second method comprises considering a package to be defective if at least two quality indices conjointly have a dissimilarity score greater than 1, indicating non-conformity with respect to the reference.

A third method comprises considering a package to be defective if at least three quality indices conjointly have a dissimilarity score greater than 1, indicating non-conformity with respect to the reference.

A fourth method comprises considering a package to be defective if at least four quality indices conjointly have a dissimilarity score greater than 1, indicating non-conformity with respect to the reference.

Another method comprises computing an overall score by weighting and/or determining the mean of the individual scores, taking into account the relative importance of each index. A package is defective if the overall score is outside defined limits.

### L - Updating the control chart

The flowchart continues with a step L, which comprises generating a control chart. The main objective of this control chart is to monitor in real time the variation in the behaviour of the welding process and to detect slow drifts liable to lead to quality anomalies.

The control chart allows the indices or scores to be tracked as they vary, and trends that could indicate a gradual deterioration in quality to be identified. By detecting these drifts at an early stage, it is possible to take corrective measures before the anomalies significantly affect the quality of the finished products. Figure 6 illustrates the tolerance envelope computed using the control chart employed. It has an upper limit 25 and a lower limit 26.

### M - Controlling the welding process

A last step of the flowchart of Figure 3 comprises adjusting the welding parameters through a control loop. The control loop is based on in-line measurements of weld characteristics during production, and does not require the machine to be stopped. The weld characteristics are defined by the quality indices computed in the preceding steps. The measured indices in particular include the width of the weld, residual temperature, eccentricity, uniformity, and any other relevant measurement that might influence quality of the weld in the context of the invention.

The control loop may be designed to be self-adaptive, meaning that it automatically adjusts the welding parameters depending on the actual observed behaviour of the process. To do this, a model of a digital twin, the parameters of which are continuously optimized depending on measured data, is used to model the behaviour of the process in real time. This digital twin allows the variations in the welding parameters to be simulated and predicted and the controls to be adjusted so as to optimize the procedure continuously. The control adjustments may include, non-limitingly, adjustments to heating temperature, heating time, heating distance and the flow rate of hot air. The controllers associated with this digital twin are for example PID controllers (PID standing for proportional-integral-derivative) or LQRs (LQR standing for linear-quadratic regulator), allowing fine and effective management of variations.

By adjusting the controls in a targeted manner, the control loop aims to maintain an optimum weld quality, by responding proactively to variations and drifts detected during production. This approach guarantees not only constant compliance with the quality specifications, but also continuous improvement of the welding process, thereby minimizing the risk of defects and anomalies in the finished products.

### N - Following steps of manufacture of the package

Following assemblage by welding of the component and tubular body, other stages of manufacture of the package may be envisaged when the package is kept after the inspection carried out according to the principles of the invention described above.

These additional manufacturing steps for example comprise adding a tamper-proofing device, said device possibly being a seal or a label.

Another example of an additional step comprises orienting an opening/closing element with respect to the impression of the tubular body.

Another example of an additional step comprises adding the opening/closing element by clip-fastening or screwing.

Another example of an additional step comprises inspecting the relative positioning of the opening/closing element and the impression of the tubular body.

Another example of an additional step comprises inspecting the seal-tightness of the package.

Another example of an additional step comprises inspecting whether all the elements of the package are compliant with criteria defined for the batch being produced.

Another example of an additional step comprises grouping the packages together and boxing them in cartons.

Another example of an additional step comprises filling the package then sealing the filling end.

Embodiments have been described in order to provide an overall understanding of the principles of the structure, function, manufacture and use of the systems and processes described in the present application. A number of these embodiments have been illustrated in the appended drawings and described above. The systems and processes specifically described in the present patent application and illustrated in the appended drawings are non-limiting embodiments and the scope of the present invention is defined solely by the claims. The features illustrated or described in relation to one embodiment may be combined with the features of other embodiments. Such modifications and variants are intended to be included within the scope of the present invention. A certain number of problems with conventional processes and systems have been noted here and the processes and systems described here may solve one or more of these problems. In addition, while this invention has been described in conjunction with a certain number of embodiments, alternatives, modifications, equivalents and variants that are in the spirit and scope of the present invention are also covered by the present patent application.

## Claims

1. Process for manufacturing a tubular package by welding the end of a tubular body to a component, said component potentially being a shoulder, a cap or a bottom, which process comprises at least the following steps:

    A. supplying a component;

B. supplying a tubular body;

C. heating respective regions to be welded on the component and on the tubular body;

D. placing under pressure the regions to be welded and partially cooling the weld;

E. capturing a thermal image of the partially cooled weld region;

F. characterizing the weld, this comprising pre-processing and processing said thermal image; ejecting defective welded packages;

said process being **characterized in that**, in step F, the processing of the thermal image uses an artificial-intelligence algorithm that extracts at least a geometric signature and a thermal signature of the weld and makes it possible in real time to detect defective packages in a production batch.

2. Process according to Claim 1, wherein said pre-processing comprises extracting a region of interest from the thermal image by means of algorithms for recognizing and detecting geometric shapes or edges.

3. Process according to one of the preceding claims, wherein said pre-processing comprises applying blurring to the thermal image to remove noise and reduce fine details that are not necessary for the subsequent analysis.

4. Process according to one of the preceding claims, wherein the pre-processing comprises flattening out the weld region (12), to convert the surface of the weld region into a planar representation.

5. Process according to Claim 4, wherein a thresholding procedure is applied to the flattened image, said thresholding comprises defining a temperature threshold and in filtering the pixels of the flattened image depending on their temperature value.

6. Process according to one of the preceding claims, wherein, in the processing, a geometric signature of the weld is extracted, said signature comprising the width of the weld and/or the geometric profile of the weld comprising the lower and upper limits of the weld.

7. Process according to one of the preceding claims, wherein, in the processing, a thermal signature of the weld is extracted, said thermal signature comprising at least a longitudinal temperature signature (20) and a transverse temperature signature (21).

8. Process according to Claim 7, wherein a uniformity index of the weld is also computed using the longitudinal thermal signature and/or the transverse thermal signature.

9. Process according to one of the preceding claims, wherein an eccentricity index of the weld is also computed during the processing, said index quantifying how centred the theoretical weld region and the actual weld region are.

10. Process according to one of the preceding claims, wherein quality indices in particular comprise the geometric signature, the thermal signature, the uniformity index and the eccentricity index.

11. Process according to the preceding claim, wherein the method for detecting defective welds employs the following steps:

- ) an individual score is assigned to each measured quality index in order to allow an independent evaluation of each criterion;
- ) the score quantifies the dissimilarity in the corresponding index between the welded package and a predefined reference;

the reference being determined by two main methods: either by a manual calibration, which defines tolerance limits based on predefined criteria, or by way of machine learning, which is based on samples considered acceptable to define these limits.

12. Process according to the preceding claim, wherein a method for identifying defective packages considers a package to be defective if at least one quality index has a dissimilarity score greater than 1.

13. Process according to the preceding claim, wherein the method for identifying defective packages computes an overall score by weighting and/or averaging the individual scores taking into account the relative importance of each index.

14. Process according to one of the preceding claims, wherein a control chart is generated, said chart monitoring in real time the variation in the behaviour of the welding process and detecting slow drifts.

15. Process according to one of the preceding claims, wherein the welding parameters are adjusted through a control loop, said loop being based on in-line measurements of weld characteristics during production, the welding parameters comprising heating temperature, heating time, heating distance and the flow rate of hot air.

16. Process according to the preceding claim, wherein the control loop is self-adaptive.

17. Device for implementing the process according to one of the preceding claims, said device comprising at least one indexed turret comprising a plurality of

**EP 4 715 729 A1**

stations (S1-S8) carrying out the steps of the process, said device comprising a thermal camera (2) in one station, said camera being intended to capture the weld region (5).

18. Device according to Claim 17, wherein the camera (2) is positioned essentially along the axis of the package (1) so as to capture the weld region (5) in a single image or the camera (2) is placed at a tilt angle (7) to the axis of the package (1) and is intended to capture a plurality of successive images of the weld region (5).

Figure 1.a                                     Figure 1.b

Figure 2

Preceding steps of manufacture of the package

A - Supplying the component

B - Supplying the tubular body

C - Heating the respective regions to be welded

D - Placing under pressure the regions to be welded and partially cooling the weld

E - Acquiring the thermal image of the partially cooled weld region

F - Pre-processing: Extracting the weld region, removing noise and flattening out

G - Extracting the geometric signature and computing the geometric index of the weld

H - Extracting the thermal signature and computing the thermal index of the weld

I - Computing the uniformity index of the weld

J - Computing the eccentricity index of the weld

K- Evaluating the quality of the weld

Weld Acceptable

**No** → Ejecting the defective package from the production batch

**Yes**

L - Updating the control chart

Welding parameters optimal

**No** → M - Controlling the welding process

**Yes**

N- Following steps of manufacture of the package

Figure 3

Figure 4

Figure 5

Figure 6

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHOKKALINGHAM S ET AL: "Predicting the depth of penetration and weld bead width from the infra red thermal image of the weld pool using artificial neural network modeling", JOURNAL OF INTELLIGENT MANUFACTURING, KLUWER ACADEMIC PUBLISHERS, BO, vol. 23, no. 5, 23 March 2011 (2011-03-23), pages 1995-2001, XP035112193, ISSN: 1572-8145, DOI: 10.1007/S10845-011-0526-4 | 1-7,14, 17,18 | INV. G06T7/00 B29C65/00 |
| Y | * the whole document * | 15,16 | |
| A | | 8-13 | |
| | ----- | | |
| X | VASUDEVAN M ET AL: "REAL-TIME MONITORING of WELD POOL during GTAW using INFRA-RED THERMOGRAPHY and analysis of Infra-Red thermal images", WELDING IN THE WORLD, SPRINGER, DE, vol. 55, no. 7-8, 1 July 2011 (2011-07-01), pages 83-89, XP001563542, ISSN: 0043-2288 | 1-7,14, 17,18 | |
| Y | * the whole document * | 15,16 | **TECHNICAL FIELDS SEARCHED (IPC)**<br><br>G06T<br>B29C |
| A | | 8-13 | |
| | ----- | | |
| Y | WO 2024/079709 A1 (AISAPACK HOLDING SA [CH]) 18 April 2024 (2024-04-18) * the whole document * | 15,16 | |
| | ----- | | |

The present search report has been drawn up for all claims

| Place of search | Date of completion of the search | Examiner |
|---|---|---|
| Munich | 6 March 2025 | Zamuner, Umberto |

EPO FORM 1503 03.82 (P04C01)

## ANNEX TO THE EUROPEAN SEARCH REPORT
## ON EUROPEAN PATENT APPLICATION NO.

EP 24 20 1683

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2025

| Patent document cited in search report | Publication date | Patent family member(s) | Publication date |
|---|---|---|---|
| WO 2024079709 A1 | 18-04-2024 | NONE | |

For more details about this annex : see Official Journal of the European Patent Office, No. 12/82

**REFERENCES CITED IN THE DESCRIPTION**

**Patent documents cited in the description**

- WO 2018150415 A